# EUROPEAN PATENT APPLICATION

(11) **EP 0 532 991 A1**
(43) Date of publication of application: **24.03.1993**
(21) Application number: 92115124.7
(22) Date of filing: 04.09.1992
(51) Int. Cl.: A21C 11/16, B29C 47/22, B29C 47/90

(54) **Machine for the automatic production of pieces of alimentary paste in stepless variable sizes**

(71) Applicant: Cimenti, Antonio, I-30027 San Dona' di Piave (Venezia) (IT)
(72) Inventor: Cimenti, Antonio, I-30027 San Dona' di Piave (Venezia) (IT)
(74) Representative: Da Riva, Ermanno

(57) **Abstract**

Machine for the automatic production of pieces of alimentary paste in stepless variable sizes constituted by a hopper feedbox (1),an extrusion assembly composed of an auger (2),located below the above hopper (1),to push the paste through a variable section nozzle (3) at whose outlet a rotating blade is located,cyclically actioned by a device (5) measuring the extrusion and by a conveyor belt (7) conveying the pieces of paste to the exit.Auger (2) is composed of a central fixed longitudinal element (21) of elliptical cross-section around which rotates a spiral (22) set on by a gearmotor (6) while the nozzle (3) is equipped with a device (3A),similar to the ones used by machines to cork bottles.

## Description

Object of this invention is a machine automatically producing pieces of alimentary paste in stepless variable sizes,to be used for various purposes.

As is known, for the production of various alimentary products as pizzas,sandwiches,pastry etc.,an initial relatively large mass of paste is mixed, later to be fractioned in smaller sizes suitable to various purposes.

Such operations may be performed manually, but machines have been invented and produced that are able to perform automatically,profitably substituting uneconomical manual operations.

Current kneading machines produce the initial mass of mixture larger than that of the finished products,mixing alimentary flours and eventually other ingredients such as water and or other liquids in order to produce the wanted mixture.

To obtain the final product,the initial mass of mixture must be divided into smaller pieces.

For this operation,a machine called "chopper" is normally used with however several defects and functional limitations.

Generally such "choppers" are composed of a hopper feedbox on their top,where the initial mass of kneaded mixture is fed.

In the lower part of the hopper,there normally is an auger device that,when operating,pushes the mixture towards its free end where a round-section nozzle outlet is located,through which the mixture passes forming a cylindrical extrusion.

Typically,a rotating blade at the outlet is cyclically operated through a cyclic device that is in turn operated by a device measuring the extrusion;the latter device is in general composed of a variable distance positioning plate on which the extrusion presses and sets on a lever that operates the cyclic device.

In this fashion,cut-down sizes are allowed to fall on adequate translation means,such as conveyor belts that convey them to the final outlet,ready for further manipulations.

It has been observed that,when the extrusion device is composed of a normal auger (a rotating cylinder with a helical surface),alimentary mixtures undergo strain due to the sharp edges of the auger:such strain induces "grinding" in the "fiber" of the paste,preventing optimum use of the final product.

In attempts to avoid the above defects,the auger has been modified,by putting along its axis a fixed longitudinal element around which a coaxial spiral rotates.Such fixed longitudinal element is sometimes of cylindrical shape,but,as this shape has given rise to functional defects,it has beentried to change it into various polygonal shapes (triangular,rectangular, square etc.)generating however,other defects and/or failures.

Finally,in the known machines there is a functional limitation due to the fact that the the extrusion nozzle section is fixed so that, in order to alternate various sizes of the extrusion paste it is necessary to change the nozzle element every time a different extrusion diameter is needed:this operation, always difficult and complex is also time consuming.Furthermore, even using a good number of various-size nozzles,it is often impossible to obtain an optimum size.

The purpose of this invention is to avoid such defects and limitations with a machine basically constructed in known manner: with a hopper feedbox on its top,into which the initial mass of kneaded mixture is fed;an extrusion assembly composed of an auger device in the lower part of the hopper that,when rotating,pushes the paste through a nozzle at the outlet of which a cyclically rotating blade operatesby a quantity-control device,positioned at variable distances from the outlet;a conveyor belt,located under the nozzle outlet to collect and convey the pieces of paste.

The auger is also constructed in a common manner,with a central fixed longitudinal element,around which a coaxial spiral rotates:one peculiar feature of this machine being that the central fixed longitudinal element has an alliptical-section shape(or similar) and that the nozzle is equipped with a stepless-variable device for outlet diameter;such device being operated by adequate manual commands.The outlet nozzle,its device,the auger formed by the central longitudinal element with its spiral and related controls and commands,are all easily removed from and put back into the machine to allow for quick cleaning and serviceing.All operations being equipped with adequate safety devices.

For the better understanding of the features and advantages of the present invention, we present herebelow a detailed description of a machine conceived only for the purpose of illustration,but to be considered a non-restrictive option of its execution.

For quick reference,enclosed herewith are the following drawings and diagrams (Fig.1 to 16) :
- Fig. 1: -Longitudinal side-view section of the complete machine.
- Fig. 2: -Section I-I of fig.1.
- Fig. 3: -Section II-II of fig.1.
- Fig. 4: -Section III-III of fig.3.
- Fig. 5: -Enlargement of the variable section nozzle as applied on the machine along the line IV-IV of fig.6.
- Fig. 6-7: -Front-view of the variable-section nozzle shown in fig.5-respectively in the position of minimum and maximum opening.
- Fig. 8: -Front view of a flange as a first element of the variable-section device mounted on the nozzle as in fig. 5.
- Fig. 9: -Section V-V of fig.8.
- Fig. 10: -Front view of a flange as a second element of the variable diameter device mounted on nozzle as in fig.5.
- Fig. 11: -Section VI-VI of fig.10.
- Fig. 12: -Front view of one of the mobile elements of variable diameter device showning a different section of the nozzle.
- Fig. 13/14: -Plan and rear view of the same element as in fig.12.
- Fig. 15: -Enlarged section views:configuration and application of one of the mobile elements of the flange shown in fig. 8,9.
- Fig. 16: -Diagram of the operating principles of the devices generating variable diameter outlets,where the number of mobile elements may vary.

With reference to the drawing summarized above,where common details bear the same reference numbers it is noted that the machine object of this invention is composed basically as follows:
a hopper feedbox 1 ;an extrusion assembly 2,3,composed of an auger 2 (positioned in the lower part of the hopper feedbox) rotated by an appropriate gearmotor 6;by an extrusion nozzle 3 (located at the free end of the auger).The extrusion nozzle 3 (being equipped with a device 3A allowing ample variations of the outlet cross-section) is operated by an appropriate command 3B;a rotating blade 4 located at the nozzle outlet 3;an output control device 5 at outlet 3 positionable at variable distances with respect to outlet 3.Such device being also responsible for cyclic activation of the rotating blade;a conveyor belt 7 located below the outlet 3, collects and conveys outside the machine the pieces of extrusion material;the whole being contained and sustained by an appropriate framework T externally panelled with panels P that for clarity are drawn with finer lines.

Always referring to the same drawings,the hopper 1 is composed of a metal case 10 with two parallel front and rear walls 11-12 connected with two side-walls 13-14 that are at right angles with front and rear walls 11-12,parallel to each other in their upper part but converging in their lower part 132-142.

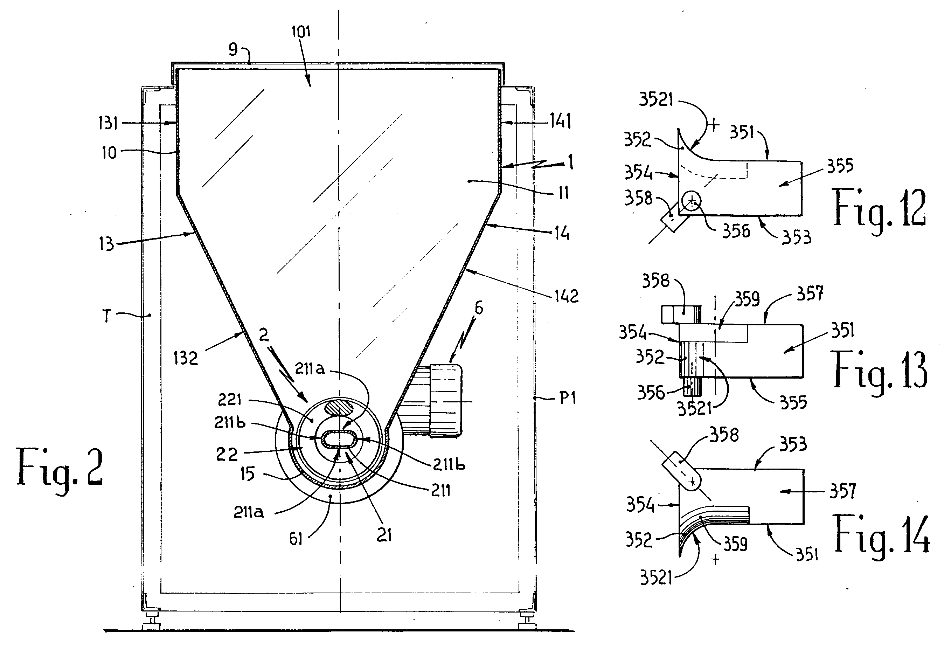

The upper part of metal case 10 is open and forms the feeding inlet 101 of the hopper 1 through which the mass of alimentary paste is introduced;the converging sides 132-142 are connected to a cylindrical casing 15. It is noted that the chute formed by the walls does not connect with the top of cylinder casing 15 as done usually,but (fig. 2)connects directly above the axis plane of the cylinder this allows a larger work-surface and a better funtioning of the auger 2 located inside the cylinder and better described further below.

A disc element 61 is located at the rear end of said cylindrical casing 15,attached on rear wall 11 of the hopper 1 ;this element contains a cylindrical cavity where a first flange 62 is positioned, from which a hollow cylindrical element 63 (representing the driving shaft of gearmotor 6)extends coaxially with a second disc-flange 23 whose internal face 231 is coplanar with rear wall 11 and from which the spiral 22 axtends.

In its front end,cylindrical casing 15 is open as on front wall 12 there is an opening contoured by flange 16 on which a removable extrusion nozzle 3 is fitted.

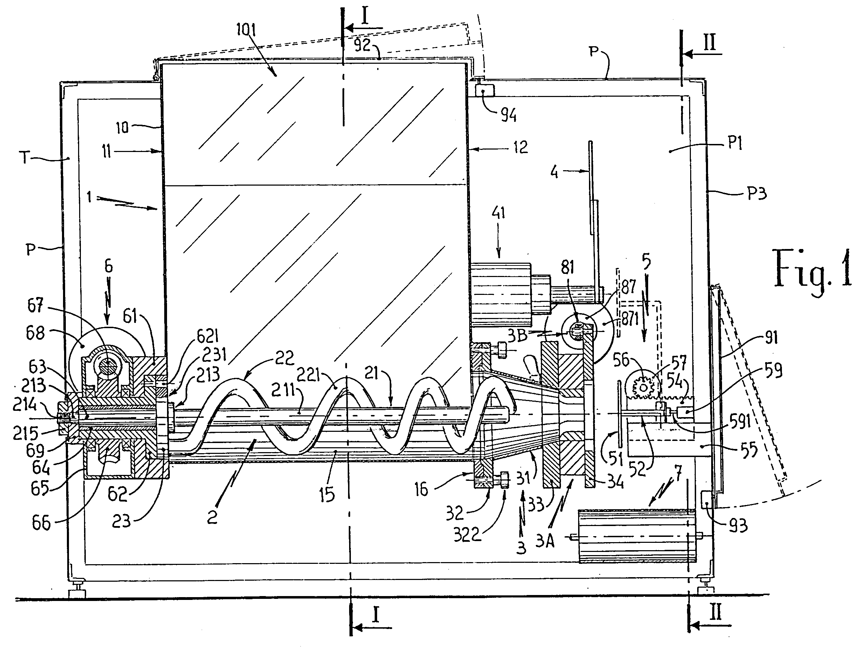

Herebelow follows the description of the auger 2 composed basically by a central fixed longitudinal element 21 and by a rotating spiral 22 (fig.1-2).

The central fixed element 21 is formed by a longitudinal bar 211 located coaxially with the cylindrical casing 15 and presenting a cross-section approximately alliptical or more precisely (fig.2)two parallel faces 211a connected by two semicircular sides 211b.Such shape is obtained by squashing a tubular metallic bar in a way that its cross-section presents a length that is double its width:in the option to which it is referred here,this means an approximate length of 40 mm and a width of 20 mm.Longitudinal bar 211 (fig.1)extends from the rear end,that is from the second dics-flange 23 terminating with its free end on the inside of the extrusion cone 31,belonging to the extrusion nozzle 3, for about half its length.

The rear end of the longitudinal bar 211 is welded on a cylindrical pin structured as an annular relief fit to beat on the external face 231 of the flange 23 and extending coaxially all along the inside of the hollow cylindrical element 63;separated from it by an appropriate bushing 64 and terminating at its free end with a cylindrical length 213 of smaller diameter and appropriately shaped (for instance with a facing or a key seat engaged on a body fixed on the rear end casing 65 of gearmotor 6,followed by a further cylindrical threaded length 214 on which a bolt 215 (or similar) is screwed to fix it on casing 65,in turn fixed on the disc element 61 so that the entire element is fitted on the fixed structure of the machine.

In other words, on the hollow cylindrical element 63 is splined gear 66 on which is engaged worm-screw 67 set on by electrical motor 68 forming altogether the motorgear 6 (fig.1).

Following with the description of the auger 2 (fig.1) it is noted that the rotating spiral 22 is composed of a spiral longitudinal element 221 fixed at one end in an appropriate manner on flange 23 and terminating at its free end in correspondence with the free end of the longitudinal bar 211.It is also noted that flange 23 is equipped with at least one appropriate opening to fit a corresponding peg projecting from the flange 62 in such a way that,when fitted,it is dragged byit in rotation.

The pitch of the helicoid generated by the rotating spiral element 22 will be progressively decreasing towards the free end; furthermore,the longitudinal element forming it may have a cylindrical cross-section or preferably an elliptical (or similar) one,with its major axis at right angle with respect to the axis of rotation so as to develop a stronger thrust.

The external diameter developped by the pitch of the helicoid will be adequately less than the internal diameter of the cylindrical casing 15 by approximately 10 mm;while the internal diameter of the pitch of rotating spiral 22 will be only a little larger than the length of the cross-section of the fixed longitudinal element 211,the distance being only a few mm; Finally,the length of the cross-section of the spiral element 221 will be about equal to the width of the cross-section of the fixed bar 211.

As reported above,the removable extrusion nozzle 3 is fitted on flange 16 on the front end of cylindrical casing 15 representing the most distinctive feature of this machine.

In common versions,the extrusion nozzle is composed of a simple truncated cone duct converging towards the outlet,whose smaller cross section constitutes the outlet of the extrusion with a definite diameter; in this manner, in order to change the size of the extrusion cross-section, it is necessary to change various outlet nozzles.

The object of this invention is that the outlet nozzle 3 is fitted with device 3A that allows to operate in stepless variable diameter.

Currently,to go from a smaller diameter of about,say,4o mm, to a larger one (usually one and a half time the smaller) of about 60 mm,four or five different nozzles are used,corresponding to four or five fixed dimentions,while it would be very useful to have more intermediate sizes,but this clearly would require the use of an even larger number of nozzles.It is worth noting that,every time it becomes necessary to change the diameter of the extrusion,the fitted nozzle must be removed and a new one fitted in its place:all this being quite unpractical,time-consuming and uneconomical.

Herebelow follows the description of the variable diameter outlet nozzle 3.

With reference to fig.1,3,5 to 15, it is noted that nozzle 3 is again composed of a truncated cone-duct 31 equipped at its rear end (its larger one) with a flange 32 and at its front end (its smaller one) with a second flange 32 whose central opening 331 will be at least equal to the maximum obtainable extrusion diameter.Flange 32 is mounted on corresponding flange 16 and will have an opening of the same diameter,will be removable from it (for instance with two threaded elements 321 complete with knobs 322 ).The two above flanges may also be fitted to one another by means of a bayonet-joint.

The device 3A,allowing stepless variable opening diameter is fitted on the front end of flange 33,a fixed flange.

In the execution to which it is referred, such device 3A is substantially similar to the device used on machines that insert corks into bottles,where four slide-blocks, properly shaped, positioned and set,are reciprocally operated in opening and closing up in such a way as to obtain an opening of stepless variable diameter.

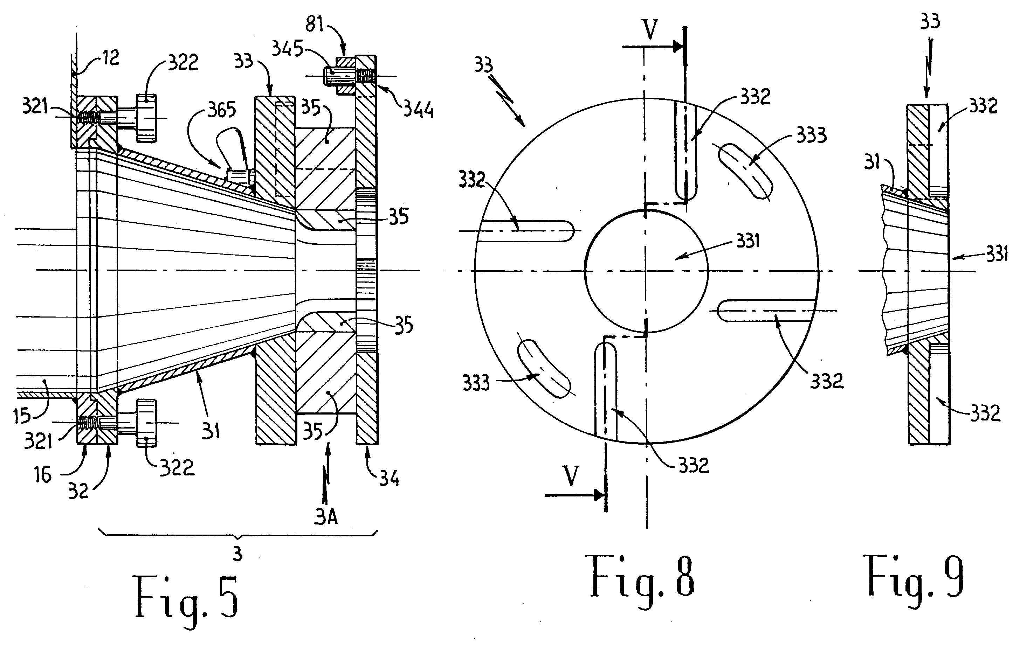

In the present reference,such device 3A is herebelow described in detail in a preferred realization, with reference to fig. 5 to 15.

With reference to the drawings,it is noted that on the flange 33 a loose flange 34 is fitted coaxially and that between them,four mobile elements 35 are positioned.Such elements 35 are driven by the rotation of loose flange 43 to slide on guides engaging on corresponding slide-guides located on flange 33 thus effectively varying the outlet diameter.

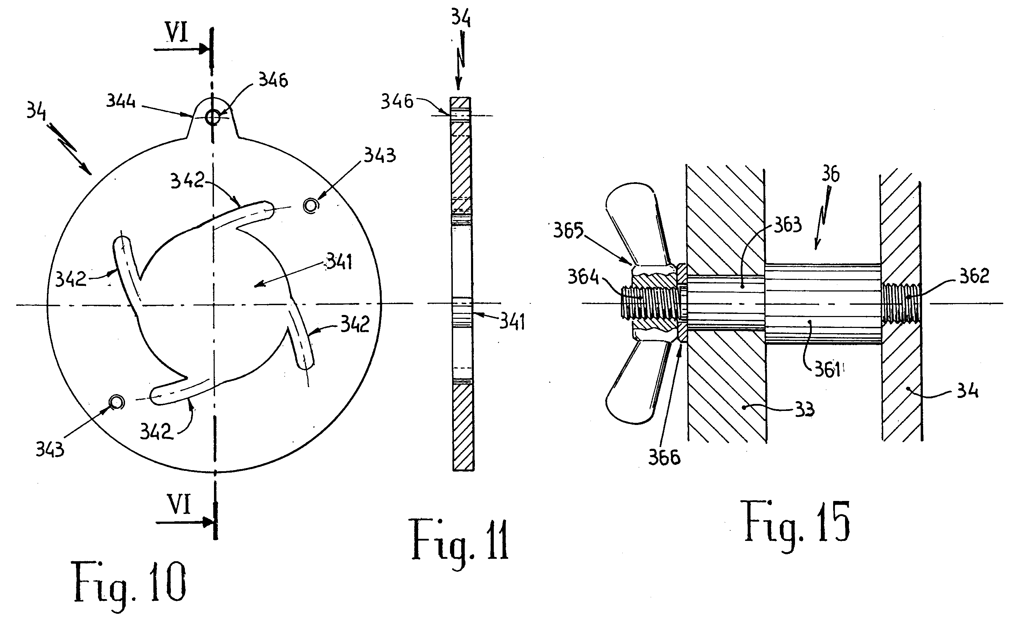

More precisely,as can be noted in details in fig. 8 and 9,the flange 33 is provided (besides the central opening 331) with four grooves 332 that extend longitudinally and at square angles with respect to one another;having each one end near the central opening of the flange and the other end towards the outer edge;resulting equidistant from each other and arranged with their longitudinal axis removed and tangential to the center of flange 33.Such grooves 332 will constitute the slide-guides of the four mobile blocks 35.

Two through grooves 333 are located near the outer edge of flange 33,diametrically opposed to each other and developping along a suitable circumference arc,constituting the slide-guides that enable controlled rotation of loose flange 34.

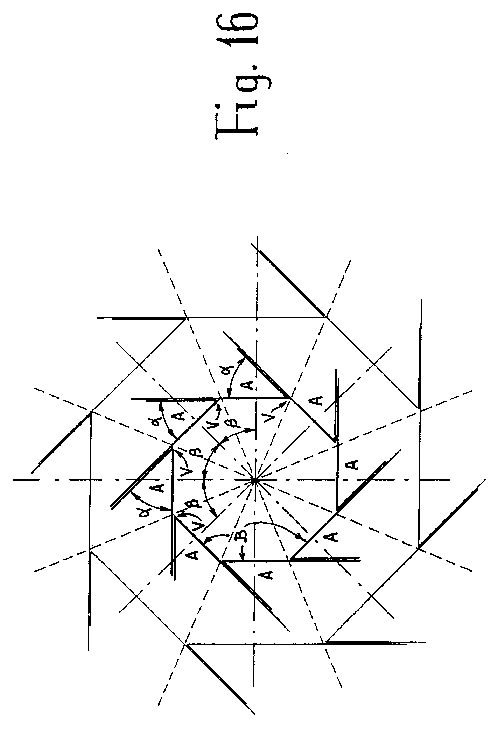

Loose flange 34 (fig. 10 and 11) has an external diameter equal to that of flange 33 and a central opening 341 of a diameter at least equal but preferably slightly bigger than the maximum diameter of the extrusion obtained with the device 3A; furthermore,on this loose flange 34 fourarc grooves are provided,equidistant from one another and extending from the central opening341,as well as two threaded holes 343 diametrically opposite. Finally, loose flange 34 is formed with a small ear complete with a central threaded hole 346 into which a pivot pin 345 engages (fig. 5) The four mobile elements 35 (fig. 12, 13,14) are formed basically by four small blocks,of which internal face 351 terminates with a projection 352 whose internal surface is arc shaped with a radius equal to the minimum extrusion radius, obtained when the four mobile blocks 35 are reciprocally commanded inwards.

An element 358 is located with its longitudinal axis on the bisecting line of the right angle formed by external face 353 and terminal face 354 and projecting from face 357:conformed with a cross-section corresponding to the ones of longitudinal grooves 332 on flange 33 where it engages;on the opposite face, on the same angle,a pin 356 is located to enable its engagement in the arc grooves 342 of loose flange 34.

On face 357 the edge of projection 352 is beveled with a bevel 359 width of half the difference between the maximum and minimum extrusion opening obtainable with device 3A and extending along part of the edge of face 351.

The connection between loose flange 34 and flange 33 is obtained by means of two connecting elements 36 more clearly illustrated by fig. 15.

Each of the two connecting elements 36 is composed by a central cylinder 361 (of a length equal to the width of mobile elements 35 at one end of which extends a threaded cylinder 362 that engages on one of the threaded holes 343 of loose flange 34, while at the other end a first cylindrical element 363 extends slightly longer than the width of flange 33 and having a diameter less or equal to the width of arc grooves 342 in which it may engage and freely slide, and a second cylindricalthreaded element 364 of smaller diameter on which a wing or a bolt nut 365 may engage and be blocked by a washer 366 The result being that loose flange 34 may rotate coaxially with flange 33 being guided by the first cylindrical elements inserted through grooves 333.

The rotation of the loose flange 43 will cause the reciprocal approach and/or spreading out of the four mobile blocks 35 and the consequent stepless variation of the extrusion outlet.

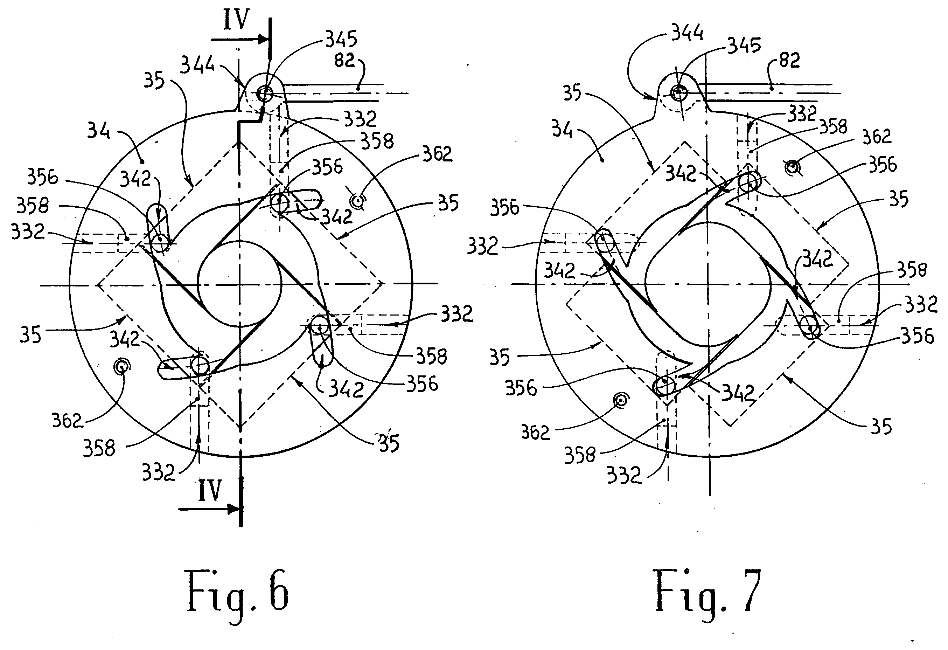

In figures 5 and 6,device 3A is shown in the position of minimum opening.

When loose flange 34 rotates (fig. 7) the pins 356 are spread apart by their reciprocal arc grooves 342 and the relative blocks 35 (fig. 5,6) will move simultaneously radially and longitudinally to the position of maximum opening.

The movement of each loose block 35 will take place along the line bisecting the internal angles composed by internal faces 351 of the four mobile blocks 35,precisely along a line at 45° with respect to faces 351,that,by being four and always equidistant,will always form squares of various sizes.

Such movement is formed by the sliding of elements 358 in corresponding longitudinal grooves 332 into flange 33,that are positioned at 45° with respect to faces 353,354 (at right angles with one another) and thus also at 45° with respect to internal face 351 of each mobile block 35.

It should be noted at this point that the number of mobile blocks may change from a minimum of three (in such case forming an opening the shape of an equilateral triangle).By increase the number of blocks 35 the shape of the opening tends to form a circle and therefore the shape of the extrusion will be close to cylindrical.

Figure 16 shows an eight block formation.

Figure 16 indicates how in each mobile block A,the angleαof vertex V (defined by internal face B and by the face of the adjacent block) is a round angle divided by the number of blocks and equal to angle β formed by the altitudes of the resulting polygons.

Translation of vertex V (and consequentially that of related mobile blocks A) must take place along the line bisecting angle β (dotted lines).

Clearly the polygonal openings obtainable may vary from a theoretical "null" when vertixes are at the center,to a maximum that,also theoretically,has no limit.For clarity,in fig. 16, two positions are illustrated:one with blocks forming a smaller opening and one with blocks forming a larger one.

The rotation of loose flange 34 is obtained with an adequate device 3B illustrated in figures 1,3,4.

Referring to those drawings it is noted that movable ring nut 81 pivots on pin 345 (fig.5) fixed on ear 344 extending from loose flange 34 Ring nut 81 is positioned on one end of a rod vertically pivoted on its other end by a pivot 83 located at one end of a cylindrical element 84 whose other end is internally threaded and engaged on a command rod 85 fixed by a common knob 86.Such command rod 85 is coaxially placed on support 87 fixed on a panel P1 with flange 871 and presents,between the thread and the knob,a ring relief 853 that,interacting with command knob 85 prevents longitudinal translation but allows rotation.

Cylinder element 84 is inserted coaxially into support 87 which in that location has a pin 842 extending radially and becoming engaged into a corresponding longitudinal groove 872 of support 87 so that it may translate longitudinally but not rotate.

By rotating command knob 86 the threaded end 851 of command rod 85 will be screwed and unscrewed in the corresponding internal thread of cylindrical element 84,which will translate longitudinally and through rod 82 will command rotation of the loose flange 34 that in turn will command the closing and opening of device 3A.

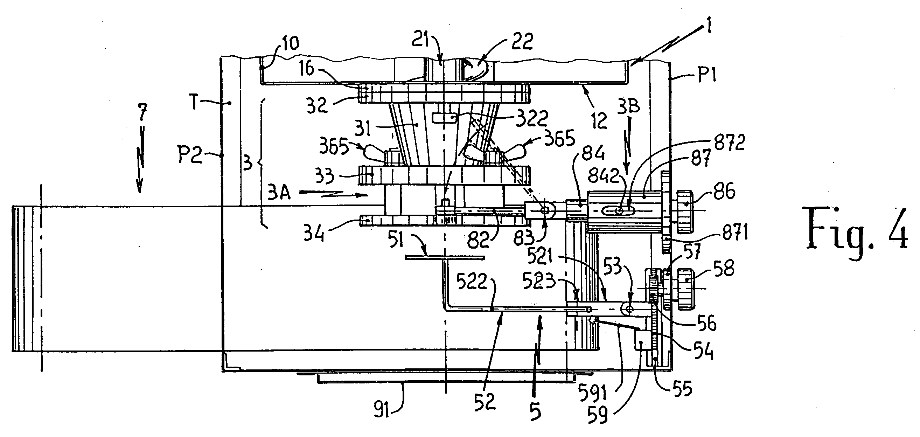

Pivoting of rod 82 on pivot 83 enables its simple and quick release from loose flange 34 rotating it inward as marked with dotted line in fig. 4,while with the inverse operation its hooking on the same is obtained;this allows a quick and easy removal or application of the whole group forming extrusion outlet nozzle 3.

Clearly the device 3A may vary in the number and conformation of mobile blocks 35 or A as well as in the conformation and position of the various kinematic motion commands that have been described here as a reference option, within a preferred possible execution.

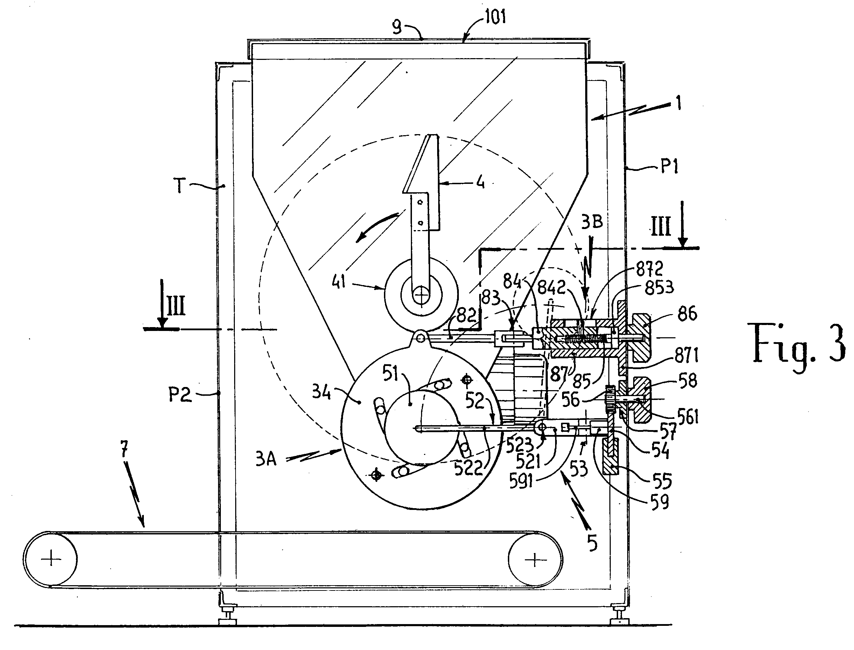

Following with the description of the whole machine (fig. 1,3), a gearmotor 41 is located near the extrusion outlet 3 that rotates the blade 4 whose internal face grazes the external surface of loose flange 34.Blade 4 is operated by the measuring device 5 to complete only one turn (fig. 3 dotted line),so that by grazing the extrusion outlet it cuts the desired length of extrusion.

Obviously,adequate well known mechanisms will automatically stop the rotation of the blade 4 after it has completed one entire turn.

As mentioned above,the rotation of blade 4 is set on by a measuring device basically constructed in known way (fig. 1,3,4) with a disc 51 applied on one end of a rod 52 vertically pivoted on its opposite end with vertical pivot 53 on rack rod 54.

Rack rod 54 is adequately driven on guide 55 fixed on panel P1 directly mounted on frame T;an appropriate gearwheel 56 is engaged on the toothed part of rack rod 54,located at one end of a shaft 561 supported by support 57,in turn fixed on panel P1 and on which is positioned a control knob 58.

A microswitch 59is set on rack rod 54 and whose control lever 591 adequately contacts against a corresponding side of rod 52.

Rod 52 is divided in two parts,a first fixed part 521 vertically pivoted with one end on pivot 53 and a second movable part 522 horizontally pivoted on the other end of part 521 with horizontal pivot 523 external to outlet nozzle 3.

Horizontal pivot 523 allows to rotate mobile part 522 so as to place it externally to outlet nozzle 3;being also pivoted with an adequate stop (not shown) enabling the positioning of disc 51 on the free end of mobile part 522,in front of nozzle during normal functioning of the machine (fig;1,3,4) and outside outlet nozzle 3 .

Furthermore (fig. 1,2) an adequate conveyor belt 7 is positioned below the exit of extrusion from outlet nozzle 3 at right angle with it and passing out of the machine,through an opening on pannelling P2.

Finally,(fig.1) a lid opening on front panelling P3,in front of the outlet nozzle 3,allows access for operations of removal or repositioning of the whole block constituting extrusion nozzle 3 after removing elements 51 and 522.Such opening will be closed by an adequate tilting lid 91(fig. 1 dotted line).

A further lid 92 is located over the mouth of hopper feedbox 1 to allow feeding of the alimentary paste into the machine.

Both lids 91 and 92 must remain closed during machine operations.For safety therefore,on the fixed part of the machine two adequate microswitches 93 and 94 (fig. 1) are placed,that are electrically connected to the supply mains in a way that when even one of the lids are opened every element of the machine switches off.

Herebelow follows a brief summary of the fonctioning of the finished machine.

Considering the fully assembled machine,the operator will be able, as described, to regulate the cross-section of extrusion nozzle 3 by adequately rotating command knob 86;the positioning of disc 51 of measuring device 5 at adequate distance from outlet 3 by rotating tha appropriate knob 58.

With the machine set in this manner,lid 92 may be opened and the mass of alimentary paste introduced into the hopper feedbox 1 through its mouth 101;at this point the main switch may be turned on and the machine operated.

Thus gearmotor 6 sets in motion spiral 221 of auger 2,which, engaging the mass of paste introduced through the hopper feedbox 1 into the cylindrical casing 15,pushes it progressively towards outlet nozzle 3.The paste penetrates into the truncated cone duct 31,through the opening of device 3A and exits in the shape of an extrusion with a cross-section determined by the shape and the size of the opening that may be stepless varied.

The extrusion,almost cylindrical in shape,after flowing out of nozzle 3, pushes disc 51 of measuring device 5 which,through rod 5 commands microswitch 59 (fed by motorgear 41) rotating blade 4 that thus grazes nozzle 3 and cuts a piece of the extrusion defined by the setting of device 3A and that of disc 51.

The piece of extrusion thus obtained will fall on conveyor belt 7,commanded into translation together with blade 4.Translation of conveyor belt will last long enough to convey the piece of extrusion outside the machine,to be collected for further manipulations.

From the above,the main advantage of this machine appears clear:with known traditional machines, only stepless variable lengths are possible,while,to vary the diameter it is necessary to empty the machine of all the paste,stop it,open the front lid for access to the nozzle,remove the nozzle and replace it with the one of desired cross-section;close the lid,fill the machine and restart operating the machine.

With the machine object of this invention it is possible to obtain both stepless variable length and diameter while the machine operated.It is noted that with the adequate relation between length and diameter it is possible to obtain pieces of alimentary paste that are practically spherical,a shape that becomes very practical for the preparation for instance of pizzas.The elliptical cross-section (or similar) of the central fixed element 21,together with the corresponding shape of the longitudinal element forming spiral 221,allow to obtain a better and faultless functioning of the auger 2.

It is also noted how the peculiar conformation and interconnections of the various elements of the machine allow to quickly easily and safely carry out all operations of removal and repositioning of all internal elements such as the fixed element 21 and spiral 22 together forming auger 2,as well as variable section outlet nozzle 3,in turn conceived so as to be easily stripped down into the various elements forming device 3A.

All this allows to perform a complete and safe cleaning of all the parts that are in contact with the alimentary paste,therefore obtaining also maximum hygiene.

For clarity,operations of disassembling and reassembling of the various parts of the machine are described herebelow.

In the first place the operator opens lid 91 and in so doing, by the intervention of microgear 93,totally switches off the machine so that the inside may be reached in total safety.He then holds mobile part 522 of rod 52 and rotates it upward ( fig. 1,3 dotted line) in order to position it out of the way of nozzle 3;then pushes inward rod 82 positioning it (fig. 4 dotted line) so as to disengage ring nut 81 from pivot 345 fitted on ear 344 protruding from the edge of loose flange 34 and from nozzle 3.Now,holding the command knobs 322 he unscrews the threaded elements 321 so that the whole nozzle assembly 3 is freed and ready to be removed.At this point he unscrews bolt 215,that holds both the central fixed element 21 and the corresponding spiral 22,so that both may be removed from the machine, and from flange 16 that now is free as nozzle 3 assembly has already been removed.

Finally, after unscrewing wing nuts 365 the nozzle assembly may be taken apart:truncated cone ducts 31,flanges 32,33,loose flange 34 and the four mobile elements 35.

At this point the operator may easily proceed to the cleaning of hopper feedbox 1,as well as of all the other elements that have been removed.

After that,the whole may be reassembled by the reverse procedure.

## Claims

1. Machine for automatic production of pieces of alimentary paste of stepless variable dimentions constructed basically of a feeding inlet in the form of a hopper feedbox 1 into which the alimentary paste (previously kneaded) is introduced from the top,and of an extrusion assembly composed by an auger 2 in the lower part of the hopper feedbox 1 that,when rotationg pushes the paste engaged in it through a nozzle 3 at the edge of which a blade 4 is positioned and set-on cyclically by a proper gearmotor 41 actioned by measuring device 5 (positionable at variable distances from the outlet);constructed also of a conveyor belt 7 located under the outlet's exit,that collects and conveys outside the machine the pieces of alimentary paste.
The auger assembly 2 is constructed by a central fixed longitudinal element 21 around which a rotating spiral 22 is coaxially positioned and activated by an appropriate gearmotor 6. The present machine is characterized by the fact that the central fixed longitudinal element 21 of auger 2 has an elliptical cross-section (or similar) and by the fact that the outlet nozzle 3 is provided with device 3A that allows stepless variations of the outlet diameter;such device 3A being operated through command device 3B by appropriate manual commands; nozzle 3,device 3A,central fixed longitudinal element 21 and spiral 22 are all easily and quickly removed and repositioned into the machine to allow a complete and easy cleaning;all complete with appropriate controls and safety devices.

2. Machine,as in claim 1,characterized by the fact that the chute 132-142 formed by lateral walls 13,14 of the hopper feedbox do not connect directly over the cylindrical casing 15 (containing auger 2) but at a line directly above the horizontal plane of it.

3. Machine as per claim 1,characterized by the fact that nozzle 3 is composed by a first part constituted by a truncated cone duct 31 and by a second part constituted by device 3A;the truncated cone duct 31 is provided with a flange 32,fitted with the appropriate means to allow its positioning on flange 16 located at the outlet opening of cylindrical casing 15 and at its smaller end with a flange 33 into which device 3A is positioned and becomes part of; device 3A being substantially similar to those applied on machines that insert corks into bottles.

4. Machine,as per claim 1 and 3,characterized by the fact that such device 3A is composed basically by four mobile elements 35 reciprocally driven so as to generate an opening of stepless variable dimentions;such mobile blocks 35 are located between flange 33 and loose flange 34,that is coaxial and removable with appropriate connecting elements 36, shaped in way so as to allow controlled rotation with the appropriate device 3B.

5. Machine as per claims 1,3,4 characterized by the fact that mobile blocks 35 are constituted by parallelepiped elements,each provided in its rear face 357 (the one that after disassembling is adjacent to flange 33) by an extending element 358 located along the bisecting line of the vertex resulting between external face 353 and terminal face 354,adjacent to the internal face of the adjacent block 35; such extending element 358 being driven along corresponding longitudinal grooves 332 machined on flange 33,and presentin a pin 356 for engagement into a corresponding arc groove 342,machined on loose flange 34; rotation of flange 34 commands the four mobile elements 35 along the respective bisecting line of the inner angles of the corresponding square opening generated by them.

6. Machine,as per claims 3,4,5,characterized by the fact that within device 3A,mobile blocks A may vary in number from a minimum of three and generating corresponding openings in the shape of an equilateral polygon whose sides are defined by the number of blocks A;such mobile blocks A will be shaped each so that angle α of vertex V formed by respective internal face B is equal to a round angle divided by the number of mobile blocks;vertexes V and relative mobile blocks A are commanded to translate along the lines bisecting angles β defined by the altitudes of the corresponding equilateral plygons being generated.
All as substantially described and illustrated and for the purposes specified herewith.
